# FASCICULE DE BREVET EUROPEEN

(11) **EP 1 392 497 B1**
(45) Date de publication et mention de la délivrance du brevet: **26.03.2008**
(21) Numéro de dépôt: 02750867.0
(22) Date de dépôt: 29.04.2002
(51) Int. Cl.: B29D 30/66, B29D 30/68, B60C 11/00, B29D 30/52

(54) **BANDE DE ROULEMENT RECREUSABLE ET PROCEDES POUR L'OBTENIR**
NACHSCHNEIDBARE LAUFFLÄCHE UND VERFAHREN ZU DEREN ERHALT
REGROOVABLE RUNNING TREAD AND METHODS FOR OBTAINING SAME

(30) Priorité: 03.05.2001 FR 0105949
(43) Date de publication de la demande: 03.03.2004
(73) Titulaire: Société de Technologie Michelin, 63000 Clermont-Ferrand Cedex 09 (FR); Michelin Recherche et Technique S.A., 1763 Granges-Paccot (CH)
(72) Inventeur: MERINO LOPEZ, Jose, F-63200 Riom (FR); METZGER, Julien, F-63000 Clermont-Ferrand (FR)
(74) Mandataire: Diernaz, Christian
(86) Numéro de dépôt international: PCT/EP2002/004712
(87) Numéro de publication internationale: WO 2002/090094

(56) Documents cités:
- DE-C- 533 651
- FR-A- 2 758 768
- FR-A- 2 759 321
- FR-A- 2 763 892
- US-A- 2 148 343
- US-A- 2 960 138
- US-A- 3 578 055
- US-A- 5 247 983
- US-A- 5 603 366
- PATENT ABSTRACTS OF JAPAN , 7 octobre 1992 (1992-10-07) -& JP 04 176709 A (BRIDGESTONE), 24 juin 1992 (1992-06-24)
- PATENT ABSTRACTS OF JAPAN , 11 mai 2001 (2001-05-11) -& JP 2001 187516 A (BRIDGESTONE), 10 juillet 2001 (2001-07-10)

## Description

L'invention concerne un pneumatique, et plus particulièrement la bande de roulement d'un tel pneumatique apte à être recreusée, quelles que soient les caractéristiques d'une telle bande de roulement.

Dans la très grande majorité des cas, les sculptures de bandes de roulement pour pneumatique pour véhicule poids lourd sont pourvues de rainures circonférentielles, rectilignes, en zigzag ou ondulées, lesdites rainures pouvant être réunies par des rainures et/ou incisions transversales. Les rainures circonférentielles comportent généralement des témoins d'usure, petites plates-formes de mélange caoutchouteux vulcanisé (ou gomme) couvrant sur une certaine longueur circonférentielle le fond de ces rainures, ledit témoin indiquant la profondeur de sculpture minimale qui doit légalement rester sur la bande de roulement en utilisation. Les sculptures pour véhicules poids lourd sont recreusables (opération par laquelle on peut recreuser de nouvelles rainures), et les pneumatiques ayant de telles sculptures portent sur leurs flancs la mention anglaise "Regroovable" ou le symbole "U". Le recreusage permet d'une part de prolonger le potentiel d'adhérence du pneumatique poids lourd et d'autre part d'accroître de façon importante le rendement kilométrique : de 15 à 30% selon les cas et cela sans pénaliser la possibilité de rechapage, qui est par ailleurs une caractéristique essentielle d'un pneumatique poids lourd. Il faut ajouter que le recreusage permet également une économie de carburant, le pneumatique présentant une résistance au roulement plus faible, du fait de la profondeur réduite des rainures à l'état initial comparativement à celles d'un pneumatique ayant à l'état neuf une profondeur de sculpture totale correspondant à la profondeur de recreusage maximale.

Comme connu en soi, le recreusage d'une rainure peut s'effectuer à l'aide d'une lame arrondie chauffante, manipulée encore souvent par un opérateur. Ladite lame, reliée à un bâti qui prend appui sur la surface de bande de roulement, peut être utilisée manuellement de façon à suivre assez fidèlement le tracé de la rainure sur la surface de la bande de roulement, même dans le cas d'une rainure à tracé non rectiligne. Cette opération de recreusage requiert cependant un certain nombre de précautions. La première d'entre elles consiste à effectuer l'opération de recreusage lorsqu'il reste environ 2 mm de profondeur de rainure, ladite profondeur étant mesurée entre la surface de bande de roulement et la surface radialement extérieure des témoins d'usure placés en fond de rainure. Cette précaution permet une bonne visualisation du dessin de sculpture et ainsi de le reproduire sans difficulté majeure. Connaissant la profondeur de sculpture restante et la profondeur de recreusage préconisée par le manufacturier de pneumatiques, il est alors possible d'ajuster et de régler la hauteur de la lame de recreusage.

Les profondeurs de recreusage généralement indiquées sont des profondeurs théoriques. Si elles sont, dans une majorité de cas, satisfaisantes, et permettent de régler théoriquement la hauteur de lame pour conserver approximativement une certaine épaisseur de gomme entre le fond de rainure recreusée et la face radialement supérieure de l'armature de sommet, les risques d'un recreusage trop profond ne sont pas exclus. Or un recreusage trop poussé peut entraîner des dommages provoquant la destruction prématurée de l'enveloppe de pneumatique. Il peut aussi compromettre la possibilité d'un rechapage économique, c'est-à-dire un rechapage où seule la bande de roulement est changée. Il peut aussi, dans certains cas extrêmes, laisser apparaître, au fond des nouvelles rainures après recreusage, les nappes de l'armature de sommet radialement sous-jacente, ce qui n'est pas admis de manière générale par les législations en vigueur.

Afin de permettre la réalisation d'un recreusage respectant précisément la présence d'une épaisseur de caoutchouc, au-dessus de la face radialement extérieure de l'armature de sommet, minimale et fixée par le manufacturier de pneumatiques, tout en permettant d'accroître au maximum le rendement kilométrique du pneumatique, le brevet US 6 003 576 préconise, dans un pneumatique, comprenant une armature de carcasse radiale surmontée radialement d'une armature de sommet formée d'au moins une nappe d'éléments de renforcement, et une bande de roulement pourvue de rainures pouvant être recreusées, de munir les parties de bande de roulement, disposées radialement sous les rainures recreusables, d'indicateurs de profondeur, chaque indicateur comprenant au moins un moyen indiquant la profondeur minimale à atteindre pour un recreusage efficace et la profondeur maximale ne devant en aucun cas être dépassée.

Les indicateurs de profondeur se présentent préférentiellement sous forme d'incisions de largeur faible non nulle placées en fond de rainure soit parallèle à la direction de ladite rainure, soit perpendiculaire à ladite direction, soit les deux simultanément, le moyen indiquant les profondeurs minimale et maximale étant alors la forme géométrique du fond de l'incision indicatrice de profondeur.

Bien qu'ayant conduit à d'énormes progrès dans l'art et la manière de recreuser une bande de roulement, les indicateurs de recreusage n'enlèvent pas, malgré la mécanisation poussée et la robotisation, le risque de passage d'une lame de découpe très près des nappes de l'armature de sommet ; ces indicateurs ne suppriment pas la présence humaine pour les réglages de profondeur. Par ailleurs, le recreusage est réalisé radialement sous les rainures originelles, conçues en fonction d'une épaisseur de bande de roulement neuve, et non en fonction d'une bande de roulement dont l'épaisseur a fortement diminué et dont le dessin de sculpture optimal n'est pas obligatoirement le dessin conçu pour l'épaisseur normale de bande de roulement.

Il a également été proposé (US 2 148 343) d'incorporer dans la bande de roulement du pneumatique neuf une pluralité de cordons disposés à l'intérieur de ladite bande dans le sens longitudinal. Dès que l'usure de la bande atteint les cordons ces derniers sont éjectés par la force centrifuge et de nouvelles rainures sont alors formées. Cette solution conduit à des risques liés à l'éjection de morceaux plus ou moins grands de cordons qui lorsqu'ils sont projetés à haute vitesse présentent un risque potentiel pour les personnes ou les véhicules à proximité ; en outre, ces morceaux constituent une pollution de l'environnement.

Afin de s'affranchir du mieux possible de tous les inconvénients cités ci-dessus, l'invention propose de figer les caractéristiques de recreusage, en particulier de profondeur de recreusage, dans la bande de roulement à l'état neuf.
Aussi, la bande de roulement d'épaisseur E, conforme à l'invention, destinée à être utilisée dans un pneumatique à armature de carcasse surmontée d'une armature de sommet, comprend sur sa surface de roulement extérieure une pluralité de rainures de profondeur h, parmi lesquelles au moins des rainures circonférentielles séparées axialement par des nervures ; cette bande est en outre munie d'au moins un élément anti-liaison gomme sur gomme, interne, dont la paroi extérieure, vue en section méridienne, a en partie un contour identique au contour de la paroi de la rainure de recreusage à créer, le(les) points de ladite paroi le(les) plus éloigné(s) de l'axe de rotation étant radialement distant(s) de la surface de bande de roulement d'une quantité h₁ inférieure à la profondeur h des rainures, et le(les) points de ladite paroi le(les) plus proche(s) de l'axe de rotation étant radialement distant(s) de la surface de bande de roulement de la hauteur maximale de recreusage H, cette bande étant caractérisée en ce que chaque élément anti-liaison délimitant une rainure de recreusage comporte un moyen assurant une liaison partielle à son environnement caoutchouteux, ledit moyen se présentant sous la forme d'au moins un pont de gomme empêchant l'éjection de la matière occupant ladite rainure de recreusage pendant le roulage lorsque ledit élément anti-liaison débouche sur la surface de roulement après usure tout en permettant l'enlèvement de ladite matière par un opérateur par rupture de chaque pont de gomme.

Le moyen assurant une liaison partielle de l'élément anti-liaison au reste de la bande de roulement peut consister :
- soit en la forme ou le contour des extrémités radialement supérieures des branches des incisions ou des intercalaires disposés dans la masse caoutchouteuse ; ledit contour étant défini comme une ligne continue à hauteur variable, ladite hauteur étant mesurée par rapport au fond de l'élément anti-liaison (point de la paroi extérieure dudit élément le plus éloigné de la surface de la bande de roulement), et étant avantageusement, parce que simple, représentatif d'une fonction périodique (contour ondulé, en zigzag, crénelé ou d'une forme équivalente) ;
- soit en une pluralité d'orifices dans les parois d'un intercalaire en matériau solide, orifices permettant la formation lors du moulage et de la vulcanisation de la bande de roulement de ponts de gomme entre le cordon de recreusage et le restant de la bande de roulement, chaque orifice ayant une superficie au plus égale à 25 mm² et des dimensions maximales comprises entre 0,5 mm et 25 mm,
- soit en au moins une discontinuité d'une incision ou d'un intercalaire, ladite discontinuité permettant en outre et comme ci-dessus la formation de ponts de gomme entre cordon de recreusage et bande de roulement.

Lorsque le pneumatique arrive à une usure telle que la paroi radialement extérieure d'un élément anti-liaison débouche sur la surface de roulement, la portion de gomme insérée à l'intérieur de l'élément ou cordon de recreusage (par exemple, la matière entre les deux branches d'un élément anti-liaison) est retenue par les moyens de liaison partielle qui évitent toute projection violente lors du roulage. Ces mêmes moyens sont dits de liaison partielle puisqu'ils sont prévus pour permettre, le moment venu, l'enlèvement du cordon de recreusage par un opérateur exerçant un effort raisonnable, éventuellement sans l'aide d'outil spécifique.

Préférentiellement, il est prévu, en combinaison avec le moyen de liaison partielle de chaque élément anti-liaison, un moyen signalant que l'élément anti-liaison débouche sur la surface de roulement de la bande de roulement partiellement usée (c'est-à-dire à un niveau d'usure tel que les extrémités dudit élément radialement les plus proches de la surface de roulement à l'état initial viennent en contact avec la chaussée pendant le roulage). Ce moyen rendant visible l'élément anti-liaison peut être une matière ayant une couleur distincte de la couleur de la bande pour être clairement visible.

Un élément anti-liaison gomme sur gomme (une gomme étant, comme connu en soi, un mélange caoutchouteux comprenant un ou plusieurs élastomères, une ou des charges renforçantes, des produits de vulcanisation ainsi que divers adjuvants) peut se présenter sous les deux formes suivantes :
- une découpe ou une incision dont les parois en vis-à-vis sont distantes d'une épaisseur pouvant être comprise entre 0,2 mm et 2 mm, et séparées par l'atmosphère,
- un intercalaire d'épaisseur e anti-collant ou espace de largeur e rempli d'un matériau solide ayant la propriété d'être un anti-collant entre gommes et de ne pas coller lui-même sur des gommes ou d'être très aisément dégradable ou pouvant être déchiré sous un faible effort, la quantité e pouvant être quasi-nulle.

Il faut entendre par élément anti-liaison interne un élément totalement inséré à l'intérieur de la bande de roulement considérée à l'état neuf (les parois extérieures de cet élément sont entièrement contenues à l'intérieur de la bande de roulement) et ne débouchant pas sur la surface de roulement à l'état neuf.

Un élément anti-liaison, qu'il soit sous forme d'incision ou d'espace avec matière anti-collante, a, vu en coupe, des parois extérieures pouvant être représentées par une courbe fermée telle que cercle, parallélogramme ..., ou par une courbe ouverte : l'élément anti-liaison possédant alors au moins deux branches d'épaisseur e, qui sont préférentiellement, mais non nécessairement, sensiblement parallèles au plan équatorial (il faut ici entendre par section d'un élément anti-liaison une section perpendiculaire à sa dimension la plus grande).

Les points de la paroi extérieure d'un élément les plus éloignés de l'axe de rotation sont préférentiellement distants de la surface de bande de roulement à l'état initial d'une quantité h₁ telle que la différence (h - h₁) est au moins égale à l'épaisseur normalisée des indicateurs d'usure situés dans le fond des rainures circonférentielles.

Dans le cas d'élément anti-liaison à au moins deux branches, les contours ou formes des branches, vus en section, peuvent être tels que le fond ou base dudit élément, qui réunit radialement à l'intérieur les deux branches, est soit relativement étroit axialement, soit relativement large axialement. Il faut entendre par relativement étroit une base dont la largeur axiale est au plus égale à 6 mm. Réciproquement, toute largeur axiale de la base supérieure à 6 mm confère à ladite base la qualification de large, la largeur axiale d'un fond d'élément anti-liaison à deux branches étant la distance axiale séparant les extrémités radialement intérieures desdites deux branches. Dans le premier cas, c'est-à-dire à base étroite, les branches peuvent être indépendantes l'une de l'autre, c'est-à-dire non reliées entre elles. Dans le deuxième cas (base large), les extrémités radialement intérieures des branches sont axialement réunies par une base de forme généralement courbe, telle que circulaire ou elliptique, et dont la paroi radialement extérieure a une forme identique au fond d'une rainure à créer par recreusage.

Les éléments anti-liaison d'une bande de roulement sont généralement circonférentiels, mais ils peuvent aussi former un réseau de manière à obtenir non seulement le recreusage de rainures circonférentielles mais aussi le recreusage de rainures transversales et/ou obliques débouchant sur lesdites rainures circonférentielles.

Un objectif de l'invention est aussi de proposer un ou plusieurs procédés d'obtention d'une bande de roulement destinée à être recreusée après usure jusqu'à la limite légale. Un des procédés d'obtention de bande de roulement non vulcanisée, conforme à l'invention, comporte les étapes suivantes :
a) - réalisation d'une première bande profilée en mélange caoutchouteux non vulcanisé pourvue avec des rainures correspondant aux rainures de recreusage à créer le moment venu ;
b) - réalisation des intercalaires avec matériau solide anti-collant, intercalaires qui, vus en section, épousent au moins partiellement la(les) forme(s) des rainures de recreusage,
c) - insertion desdits intercalaires dans les rainures de la première bande ci-dessus en pourvoyant la bande avec des moyens adaptés en nombre, en dimensions, en localisation pour obtenir la formation d'au moins un pont de liaison en mélange de caoutchouc entre le cordon (6) de recreusage et le reste de la bande de roulement, ce pont de liaison empêchant la séparation en cours de roulage du cordon de ladite bande,
d) - pose dans lesdites rainures munies de leurs intercalaires des cordons de recreusage profilés et en mélange caoutchouteux non vulcanisé,
e) - pose éventuelle sur l'ensemble ainsi constitué d'une deuxième bande de mélange caoutchouteux non vulcanisé, avec rainures ou non.

En pratiques,les intercalaires peuvent être soit pourvus d'orifices adaptés en nombre, en dimensions, en localisation pour obtenir la répartition désirée des ponts de caoutchouc entre le cordon de recreusage et le reste de la bande de roulement, soit discontinus circonférentiellement, soit pourvus d'extrémités radialement supérieures de forme adaptée.

Le pneumatique est terminé de la manière bien connue en soi, c'est-à-dire avec pose de la bande de roulement non vulcanisée sur l'ébauche de carcasse non vulcanisée, suivie du moulage et de la vulcanisation de l'ensemble dans un moule approprié.

Un autre procédé avantageux utilise en tant qu'éléments anti-liaison des incisions d'épaisseur faible ayant, vues en section méridienne, la forme des parois des rainures à recreuser (la gomme située entre lesdites incisions formant un cordon de recreusage). Le procédé conforme à l'invention consiste alors à utiliser pour l'obtention de la bande de roulement un moule de vulcanisation à deux matrices, tel que mentionné dans le brevet EP 0858875 : une première matrice dudit moule comporte en tant qu'éléments moulants entre autres des lamelles métalliques circonférentielles susceptibles de créer par moulage et vulcanisation les éléments anti-liaison que sont des incisions, et une deuxième matrice comportant les éléments moulants destinés à former les rainures et/ou les incisions de la partie de bande de roulement à l'état neuf destinée à entrer en contact avec le sol. Les lamelles métalliques moulant les éléments anti liaison peuvent présenter à leurs extrémités des formes ondulées, en zigzag, crénelés ou équivalentes. Elles peuvent également être discontinues circonférentiellement en partie ou totalement.

La fermeture du moule à deux matrices et la vulcanisation qui suit permet d'obtenir une bande de roulement vulcanisée comprenant radialement à l'intérieur entre autres éléments les éléments anti-collants que sont les incisions ainsi formées, et radialement à l'extérieur la sculpture de la bande de roulement neuve. Le pneumatique est alors confectionné de la manière suivante, que ce soit un pneumatique neuf ou un pneumatique rechapé : après pose d'une couche de mélange caoutchouteux non vulcanisé sur l'ébauche de carcasse, couche dont l'épaisseur correspond à l'épaisseur requise au-dessus de la dernière nappe de sommet, on pose la bande de roulement pré vulcanisée obtenue ci-dessus.

La méthode de recreusage proprement dite de la bande de roulement après usure maximale (l'usure maximale étant l'usure atteinte lorsque un ou plusieurs indicateurs d'usure sont en contact avec le revêtement du sol) est alors très simplifiée et telle que les dispersions de fabrication, en particulier dans les épaisseurs de produit, et l'intervention humaine manuelle n'affectent en rien la localisation radiale des fonds de rainures de recreusage. Cette méthode de recreusage consiste, après que soient visibles au moins partiellement les parois ou extrémités radialement extérieures d'au moins un élément anti-liaison, à découper un petit nombre de ponts de caoutchouc vulcanisé reliant chaque cordon de recreusage au reste de la bande de roulement puis à extraire chaque cordon de la bande en rompant par traction ou cisaillement le reste des ponts de caoutchouc vulcanisé reliant ledit cordon pour former une nouvelle rainure.

Les caractéristiques de l'invention seront mieux comprises à l'aide de la description de modes de réalisation décrits à titre non limitatif, et illustrés par le dessin annexé sur lequel :
- la figure 1 représente schématiquement, en section méridienne, une bande de roulement de pneumatique de type 'poids lourd' conforme à l'invention,
- les figures 2 à 5 sont des vues en perspective d'intercalaires destinés au moulage de rainures de recreusage, selon quatre variantes conformes à l'invention,
- les figures 6 à 8 sont des vues d'incisions internes à la bande de roulement selon trois variantes conformes à l'invention,
- la figure 9 montre schématiquement un réseau d'intercalaires intérieurs à la bande de roulement,
- la figure 10 montre schématiquement une autre disposition des éléments anti-liaison dans une bande de roulement,
- la figure 11 montre une variante de réalisation mettant en oeuvre un élément anti-liaison discontinu.

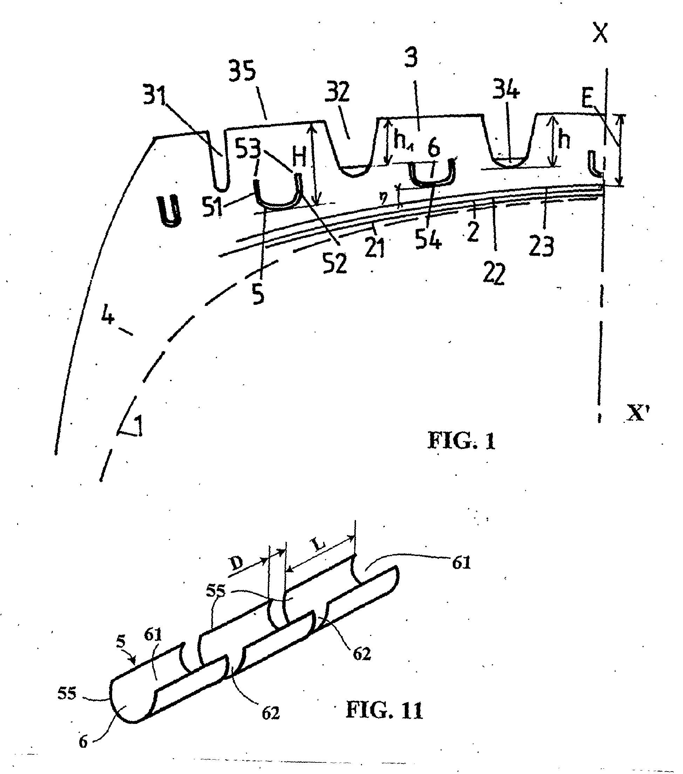

Le pneumatique P montré sur la figure 1 est de type 'Poids lourd' et de dimension 315/80 - R 22.5 ; il comprend une armature de carcasse 1, comportant, dans l'exemple décrit, une seule nappe d'éléments de renforcement métalliques, ladite armature de carcasse étant ancrée dans chaque bourrelet à une tringle par enroulement en formant des retournements axialement extérieurs (non montrés). L'armature de carcasse 1 est radialement surmontée d'une armature de sommet 2, composée d'au moins deux nappes de sommet de travail 21 et 22 de câbles métalliques inextensibles, parallèles entre eux dans chaque nappe et croisés d'une nappe à la suivante en faisant avec la direction circonférentielle des angles généralement compris entre 0 et 45°, ces nappes de travail 21, 22 étant surmontées radialement par une nappe dite de protection 23 formée de câbles métalliques dits "élastiques".

Une bande de roulement 3, d'épaisseur E, mesurée dans le plan équatorial XX' entre la surface de bande de roulement et la surface radialement extérieure de la nappe de sommet 23 radialement la plus à l'extérieur, recouvre l'armature de sommet 2 et est réunie aux deux bourrelets du pneumatique par des flancs 4. Cette bande de roulement 3 comprend des rainures 32 dites larges comparativement aux rainures 31 des bords, dites étroites. Les rainures 31 et 32 sont les rainures usuelles que l'on retrouve sur tout pneumatique à l'état neuf et qui débouchent sur la surface de contact entre le pneumatique et le sol. Les rainures 32 de profondeur h, mesurée entre la surface 35 de bande de roulement 3 et le fond de rainure, sont munies de protubérances servant d'indicateurs d'usure 34, protubérances dont la face radialement extérieure est distante de la surface de bande de roulement d'une profondeur h₁ inférieure à la profondeur h et qui, lorsqu'elles viennent en contact avec le sol lors du roulage, signalent qu'il est opportun de procéder à l'opération de recreusage.

Conformément à l'invention, l'opération de recreusage est grandement facilitée par la présence, à l'intérieur de la bande de roulement 3, d'éléments circonférentiels anti-liaison gomme sur gomme 5, éléments qui se présentent, en coupe, dans l'exemple décrit sous une forme en U. Chacun de ces éléments 5, qui ne peuvent être vulcanisés et sont par exemple en carton ou en papier de faible épaisseur, empêche axialement, lors de la vulcanisation de la bande de roulement, tout contact partiel ou total entre la portion 6 (ou cordon de recreusage 6) de mélange caoutchouteux située entre les deux branches 51 et 52 dudit élément 5 et les parties de mélange de caoutchouc avoisinantes.

Les extrémités radialement extérieures 53 des branches 51 et 52 sont distantes de la surface 35 de bande de roulement 5 de la quantité h₁, alors que l'extrémité radialement intérieure est distante de la surface 35 de la quantité H, inférieure à l'épaisseur E de bande de roulement 3 mesurée à la même position axiale que celle où est mesurée H. L'épaisseur d'une bande de roulement est en effet axialement variable en fonction des courbures respectives de la surface de roulement de la bande de roulement et de l'armature de sommet, et il en est de même de la quantité H, imposée par le manufacturier de pneumatiques en fonction de l'épaisseur η de mélange caoutchouteux minimale nécessaire radialement au-dessus de la nappe de sommet 23 radialement la plus à l'extérieur.

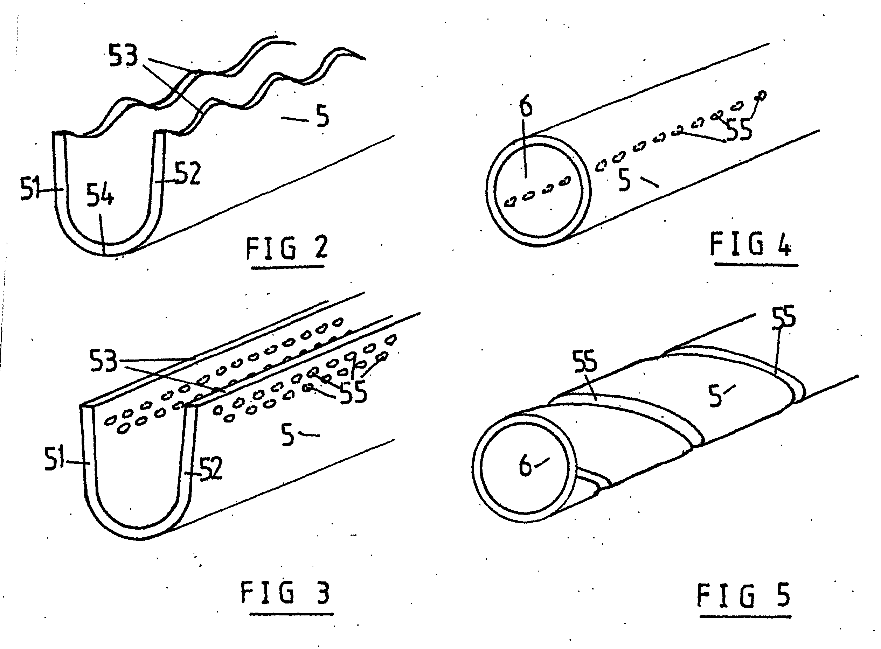

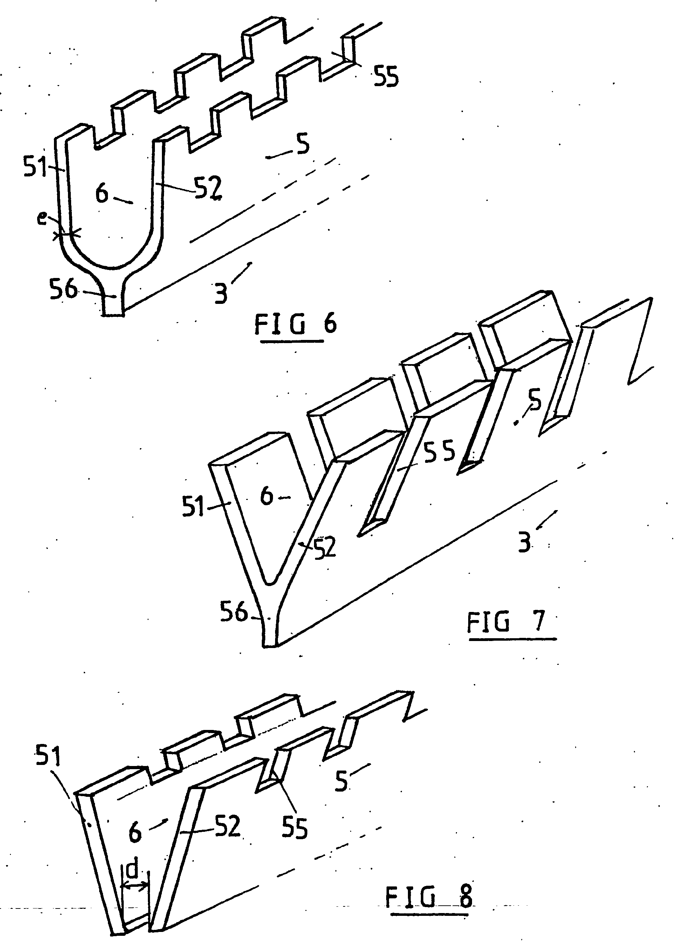

Afin que le cordon 6 de mélange caoutchouteux vulcanisé ne puisse être éjecté de la bande de roulement sous l'effet de la force centrifuge lors du roulage quand l'usure de la bande atteint les extrémités radialement extérieures 53 des branches 51 et 52 des éléments anti-liaison 5, il est avantageux qu'il y ait une liaison partielle entre le cordon 6 et le restant de bande de roulement 3. A cet effet, et comme montré par exemple sur la figure 2, le tracé (c'est-à-dire le contour ou la forme géométrique) des extrémités radialement extérieures 53, est de manière préférentielle représentatif d'une fonction dite périodique : les extrémités peuvent être ondulées (figure 2), ou munies de crans de forme rectangulaire (figure 6) ou triangulaire ou demi-circulaire (non montrés). Lorsque l'usure de la bande de roulement 3 est telle que les indicateurs d'usure 34 sont en contact avec le sol, les parties des extrémités 53, radialement les plus proches de la surface de la bande de roulement 3, de l'intercalaire 5 apparaissent sur la surface de roulement, tandis que subsistent des ponts de caoutchouc vulcanisé assurant le maintien en place du cordon 6 au moins pendant un certain temps. Ces ponts de caoutchouc sont aptes à être rompus par une personne désireuse de recréer de nouvelles rainures en enlevant le cordon 6 de façon relativement aisée.

La liaison partielle entre le caoutchouc du cordon 6 et le restant de la bande de roulement peut aussi se faire sur les branches 51 et 52. Comme montré sur la figure 3, les branches 51 et 52 de l'intercalaire, formé dans le même matériau que précédemment, sont dans leur partie supérieure (c'est-à-dire proche de la surface de roulement à l'état initial) munies d'orifices à contour fermé 55 permettant lors du moulage de la bande de roulement le passage de mélange caoutchouteux pour lier la bande de roulement et le cordon de recreusage 6, et ainsi la création de ponts de gomme vulcanisée, ponts qui seront ensuite rompus par coupure et/ou par traction au moment de l'opération de recreusage.

Il est possible d'utiliser d'autres variantes : si la forme d'un U montrée sur les figures 2 et 3 est qualifiée de surface ouverte, la forme circulaire de la figure 4 est une forme à surface fermée (forme circulaire en l'occurrence). L'intercalaire 5 renferme intérieurement le cordon de recreusage 6 en mélange caoutchouteux et est muni d'orifices 55 traversant ladite surface fermée pour la création de ponts de gomme entre ledit cordon et le reste de la bande de roulement au moment du moulage de la bande.

En tant qu'orifices pour former des ponts de liaison entre la bande de roulement et les cordons de recreusage, on peut employer des orifices à contour fermé ou des orifices 55 à contour ouvert ou des fentes (voir par exemple figure 7), ou une fente 55 ayant un tracé de forme hélicoïdale sur la surface extérieure du cordon de recreusage 6 circonférentiel, ladite fente 55 étant obtenue par enroulement hélicoïdal d'une bande d'un intercalaire 5 autour d'un cordon 6 en gomme, le pas d'enroulement étant approprié pour que les différents tours ne soient pas jointifs.

Que les orifices soient à contour fermé ou ouvert, la surface totale de liaison entre l'élément anti-liaison (intercalaire ou incision) et la bande de roulement, dite surface de pontage, est comprise entre 5% et 35% de la surface totale extérieure dudit élément anti-liaison de manière à rendre aisée la séparation du cordon de la bande de roulement au moment du recreusage par intervention d'un opérateur tout en évitant que cette séparation n'intervienne spontanément. Cette faible valeur de surface de pontage assure en outre un découpe suffisamment précise du cordon.

L'emploi d'intercalaires en papier, en carton ou en autre matériau présentant les propriétés d'être un anti-collant gomme sur gomme et de ne pas coller lui-même sur une gomme ou de se déchirer, est la solution préférentielle lorsque la fabrication de la bande de roulement avec éléments anti-liaison se réalise à l'état non vulcanisé.

La bande de roulement peut aussi être réalisée à l'état pré vulcanisé dans un moule ayant la particularité de posséder deux matrices, chaque matrice comportant des éléments moulants métalliques qui donneront naissance à des rainures dans la bande de roulement. Il est alors particulièrement intéressant d'utiliser en tant qu'éléments anti-liaison des incisions de faible épaisseur e, inférieure à 1 mm (généralement 0.5 mm). Comme montrées sur les figures 6 et 7, ces incisions en forme de U ou de V, ont la particularité d'avoir deux branches 51 et 52 réunies à leur base par une partie commune 56, partie qui est la conséquence nécessaire du démoulage de la bande de roulement, l'incision 5 étant créée dans le moule de vulcanisation de la bande par une lamelle métallique de même forme et la partie 56 permettant l'attache à la paroi du moule. Il est évident que le mode de réalisation ci-dessus ne permet pas la présence d'orifices fermés sur les branches latérales 51et 52 des incisions (les ponts de caoutchouc seraient coupés lors du démoulage), le seul moyen de créer des pontages entre le caoutchouc du cordon 6 et le restant de la bande de roulement étant la forme des extrémités 53 des branches. Les figures 6 et 7 montrent des formes crénelées avec une différence dans le dimensionnement des ponts, la surface de pontage restant sensiblement constante : la figure 6 fait appel à des créneaux de faible hauteur, alors que les créneaux ou fentes montrés sur la figure 7 sont plus profonds mais moins larges.

La figure 8 montre une incision qui peut être considérée comme une variante de l'incision de la figure 7 : la forme en quasi-V est conservée mais la pointe du V est tronquée de sorte que l'on est en présence de deux branches 51 et 52 indépendantes l'une de l'autre et dont les extrémités radialement intérieures sont distantes l'une de l'autre d'une quantité d faible, de l'ordre de 3 mm. Ladite distance d de liaison par collage entre la gomme du cordon de recreusage 6 et la gomme du reste de la bande de roulement 3 multipliée par la longueur circonférentielle du cordon 6 suffit à assurer le maintien du cordon après apparition sur la surface de roulement des branches 51 et 52 de l'incision 5, les extrémités radialement extérieures crénelées des branches 51 et 52 servant ici à signaler que l'usure de la bande est telle que l'opération de recreusage est devenue nécessaire.

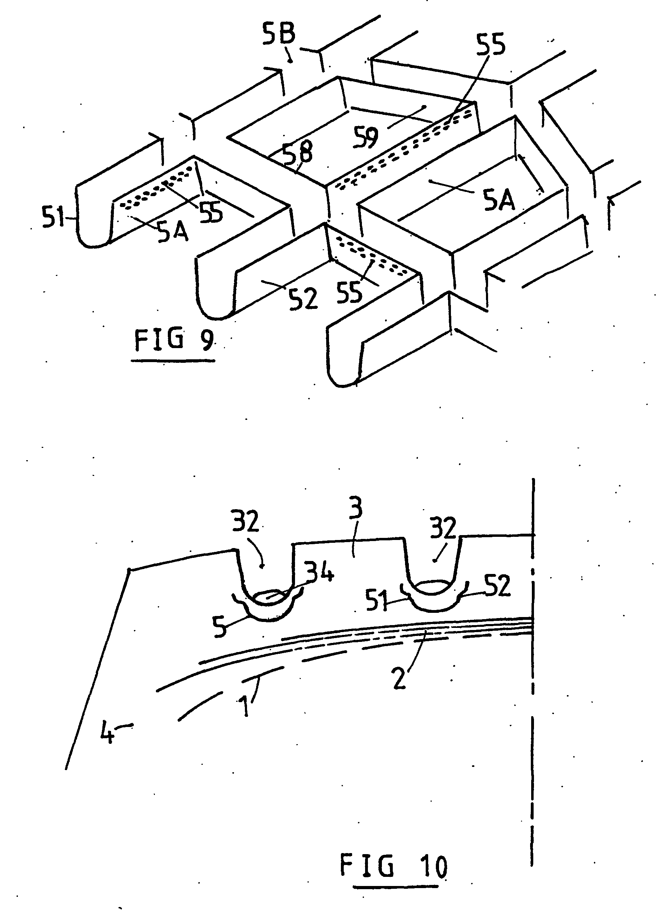

Comme le montre la figure 9, il est aussi possible de créer un réseau d'éléments anti-liaison avec des parties circonférentielles 5A et des parties transversales 5B, dont les parois respectives 51, 52 et 58, 59 sont pourvues d'orifices fermés ou trous 55 pour la création de ponts de caoutchouc entre les cordons de recreusage 6A et 6B et le reste de la bande de roulement 3. La création d'un tel réseau permet, dans le cadre du recreusage, de munir la bande de roulement d'un dessin de sculpture plus approprié à l'épaisseur de la bande de roulement après usure, sculpture rendant plus déformable la bande de roulement dans les trois directions principales, et particulièrement dans la direction longitudinale.

Le recreusage de la bande de roulement 3 peut aussi se faire à dessin de sculpture sensiblement constant : il suffit, comme montré sur la figure 10, de disposer les intercalaires ou de prévoir l'emplacement des incisions radialement sous les rainures circonférentielles originelles de la bande de roulement, lesdits intercalaires ou incisions ayant, vus en section méridienne, une forme adaptée et plus évasée à leur parties radialement extérieures et les autres caractéristiques des éléments anti-liaison étant les mêmes que précédemment.

La figure 11 montre un élément anti-liaison 5 destiné à être incorporé à l'intérieur d'une bande de roulement dans la direction circonférentielle, cet élément anti-liaison 5 étant composé d'une pluralité d'éléments totalement disjoints 57 les uns des autres et ayant chacun une section selon une forme ouverte en U. Ces éléments disjoints 57 de longueur moyenne L sont disposés les uns à la suite des autres de manière à délimiter un cordon de recreusage correspondant à la gomme 61 située à l'intérieur desdits éléments et à la gomme 62 entre deux éléments disjoints 57.. La distance moyenne D séparant chaque élément disjoint 57 est inférieure à leur longueur L (préférentiellement, la distance D est comprise entre 5% et 35% de la longueur L). Entre deux éléments disjoints 57 la gomme du cordon est reliée au reste de la bande de roulement ce qui assure la liaison du cordon avec la bande de roulement. Le moment du recreusage venu, il est aisé à un opérateur de casser les ponts de gomme 62 pour former une nouvelle rainure à l'emplacement du cordon. Une autre variante peut consister à prévoir que les branches d'un élément anti-liaison ne soient pas de même longueur (c'est-à-dire qu'une branche soit plus proche de la surface de roulement que l'autre branche du même élément).

## Revendications

1. - Bande de roulement (3) d'épaisseur H, destinée à être utilisée dans un pneumatique à armature de carcasse (1) surmontée d'une armature de sommet (2), cette bande étant pourvue sur sa surface extérieure d'une pluralité de rainures (31,32) de profondeur h, dont au moins des rainures circonférentielles séparées axialement par des nervures, cette bande comprenant au moins un élément anti-liaison (5) gomme sur gomme, interne, dont la paroi extérieure, vue en section méridienne, a en partie un contour identique au contour de la paroi de la rainure de recreusage à créer, le(les) points de ladite paroi le(les) plus éloigné(s) de l'axe de rotation étant radialement distant(s) de la surface de bande de roulement d'une quantité h₁ inférieure à la profondeur h des rainures, et le(les) points de ladite paroi le(les) plus proche(s) de l'axe de rotation étant radialement distant(s) de la surface de bande de roulement de la hauteur maximale de recreusage H, cette bande de roulement étant **caractérisée en ce que** chaque élément anti-liaison délimitant une rainure de recreusage comporte un moyen assurant une liaison partielle à son environnement caoutchouteux, ledit moyen se présentant sous la forme d'au moins un pont de gomme empêchant l'éjection de la matière occupant ladite rainure de recreusage pendant le roulage lorsque ledit élément anti-liaison débouche sur la surface de roulement après usure tout en permettant l'enlèvement de ladite matière par un opérateur par rupture de chaque pont de gomme.

2. - Bande de roulement (3) selon la revendication 1, **caractérisée en ce que** le(les) élément(s) anti-liaison (5) gomme sur gomme sont des découpes ou incisions dont les parois sont distantes d'une épaisseur comprise entre 0,2 mm et 2 mm, et séparées par l'atmosphère.

3. - Bande de roulement (3) selon la revendication 1, **caractérisée en ce que** le(les) élément(s) anti-liaison (5) gomme sur gomme sont des espaces de largeur e ou intercalaires, remplis d'une matière solide ayant la propriété d'être un anti-collant entre gommes et de ne pas coller lui-même sur des gommes, la largeur e pouvant être quasi-nulle.

4. - Bande de roulement selon la revendication 1, **caractérisé en ce que** le(les) élément(s) anti-liaison (5) gomme sur gomme sont des espaces de largeur e ou intercalaires, composés d'une matière solide ayant la propriété d'être un anti-collant entre gommes et de se déchirer aisément, la largeur e pouvant être quasi-nulle.

5. - Bande de roulement selon l'une des revendications 1 à 4, **caractérisée en ce** les éléments anti-liaison (5), qu'ils soient sous forme d'incisions ou d'espaces avec matière anti-collante, ont des parois extérieures qui, vues en section, sont représentées par une courbe fermée telle que cercle, parallélogramme....

6. - Bande de roulement (3) selon l'une des revendications 1 à 4, **caractérisée en ce que** les éléments anti-liaison (5), qu'ils soient sous forme d'incisions ou d'espaces avec matière anti-collante, ont des parois extérieures étant, vues en section, représentées par une courbe ouverte, l'élément anti-liaison possédant alors au moins deux branches (51, 52) d'épaisseur e, qui sont sensiblement parallèles au plan équatorial.

7. - Bande de roulement (3) selon l'une des revendications 1 à 6, **caractérisée en ce que** les points de la paroi extérieure d'un élément les plus éloignés de l'axe de rotation sont préférentiellement distants de la surface de bande de roulement d'une quantité h₁ telle que la différence (h - h₁) est au moins égale à l'épaisseur normalisée des indicateurs d'usure situés en fonds de rainures circonférentielles.

8. - Bande de roulement selon la revendication 6, **caractérisée en ce que** les extrémités radialement extérieures (53) des branches (51, 52) des incisions ou des intercalaires (5) disposés dans ladite bande ont des contours sous forme de lignes continues à hauteur variable, ladite hauteur étant mesurée par rapport au fond de l'élément anti-liaison (5).

9. - Bande de roulement selon la revendication 8, **caractérisée en ce que** les contours sont représentatifs d'une fonction périodique.

10. - Bande de roulement (3) selon la revendication 6, **caractérisée en ce que** les branches (51, 52) sont indépendantes l'une de l'autre, les extrémités radialement inférieures desdites deux branches étant distantes d'une quantité au plus égale à 6 mm.

11. - Bande de roulement selon l'une des revendications 3 ou 4, **caractérisée en ce que** les parois des intercalaires (5) avec matériau solide anti-collant sont pourvues d'une pluralité d'orifices (55), chaque orifice ayant une superficie au plus égale à 25 mm² et des dimensions comprises entre 0,5 mm et 25 mm, et le taux de pontage étant compris entre 5% et 35%.

12. - Bande de roulement (3) selon la revendication 1, **caractérisée en ce que** les éléments anti-liaison (5) forment un réseau 5A, 5B de manière à obtenir non seulement le recreusage de rainures circonférentielles (31, 32) mais aussi le recreusage des rainures transversales et/ou obliques débouchant sur les dites rainures circonférentielles.

13. - Bande de roulement selon l'une des revendications 1 à 12 **caractérisée en ce que** chaque élément anti-liaison comprend en outre un moyen rendant visible l'élément anti-liaison sur la bande de roulement lorsque l'usure de ladite bande est telle que les extrémités dudit élément radialement les plus proches de la surface de roulement à l'état initial viennent en contact avec la chaussée pendant le roulage.

14. - Bande de roulement selon l'une des revendications 1 à 13 **caractérisée en ce que** chaque élément anti-liaison comprend un moyen signalant que ledit cordon débouche sur la surface de roulement de la bande après usure partielle, ce moyen consistant par exemple en une coloration de l'élément anti-liaison différente de celle de la bande.

15. - Procédé de fabrication d'une bande de roulement (3) non vulcanisée selon la revendication 3, **caractérisé en ce qu'**il comprend les étapes qui suivent :
a) réalisation d'une première bande profilée de mélange caoutchouteux non vulcanisé avec des rainures correspondantes aux rainures de recreusage à créer,
b) réalisation des intercalaires (5) en matériau solide anti-collant, intercalaires épousant, vue en section méridienne, la(les) forme(s) des rainures de recreusage,
c) insertion desdits intercalaires dans les rainures de la première bande ci-dessus en pourvoyant la bande avec des moyens adaptés en nombre, en dimensions, en localisation pour obtenir la formation d'au moins un pont de liaison en mélange de caoutchouc entre le cordon (6) de recreusage et le reste de la bande de roulement, ce pont de liaison empêchant la séparation en cours de roulage du cordon de ladite bande,
d) pose dans lesdites rainures munies de leurs intercalaires des cordons (6) de recreusage profilés et en mélange caoutchouteux non vulcanisé,
e) pose éventuelle sur l'ensemble ainsi constitué d'une deuxième bande de mélange caoutchouteux non vulcanisé.

16. - Procédé de fabrication d'une bande de roulement (3) prévulcanisée selon la revendication 2, **caractérisé en ce qu'**il consiste alors à utiliser un moule de vulcanisation à deux matrices, avec une première matrice dudit moule comportant en tant qu'éléments moulants entre autres des lamelles métalliques susceptibles de créer par moulage et vulcanisation les éléments anti-liaison (5) que sont des incisions, et une deuxième matrice comportant les éléments moulants destinés à former les rainures (31, 32) et/ou les incisions de la bande de roulement (3) neuve.

17. - Méthode de recreusage d'une bande de roulement (3) selon l'une des revendications 7 ou 8, **caractérisée en ce qu'**elle consiste, après visualisation des extrémités radialement supérieures (53) des éléments anti-liaison (5), à découper un petit nombre de ponts (55) de caoutchouc vulcanisé reliant chaque cordon de recreusage (6) au reste de la bande de roulement et à extraire chaque cordon en rompant par traction le reste de ponts de caoutchouc vulcanisé.

## Claims

1. A tread (3) of thickness H, intended to be used in a tyre having a carcass reinforcement (1) surmounted by a crown reinforcement (2), this tread being provided on its outer surface with a plurality of grooves (31, 32) of depth h, including at least circumferential grooves separated axially by ribs, this tread comprising at least one internal anti-rubber-on-rubber connection element (5), the outer wall of which, viewed in meridian section, has in part a contour identical to the contour of the wall of the regrooving groove to be created, the point(s) of said wall which are farthest from the axis of rotation being radially distant from the tread surface by a quantity h₁ less than the depth h of the grooves, and the point(s) of said wall which is(are) closest to the axis of rotation being radially distant from the tread surface by the maximum regrooving height H, this tread being **characterised in that** each anti-connection element defining a regrooving groove comprises a means providing a partial connection to its rubber surroundings which prevents ejection of the material occupying said regrooving groove during travel when said anti-connection element opens on to the running surface after wear, while enabling said material to be removed by an operator.

2. A tread (3) according to Claim 1, **characterised in that** the anti-rubber-on-rubber connection element(s) (5) are cutouts or incisions the walls of which are spaced apart by a thickness of between 0.2 mm and 2 mm, and separated by the atmosphere.

3. A tread (3) according to Claim 1, **characterised in that** the anti-rubber-on-rubber connection element(s) (5) are spaces of width e or inserts, filled with a solid material having the property of being an anti-sticking means between rubbers and of not sticking itself to rubbers, the width e possibly being virtually zero.

4. A tread according to Claim 1, **characterised in that** the anti-rubber-on-rubber connection element(s) (5) are spaces of width e or inserts, composed of a solid material having the property of being an anti-sticking means between rubbers and of tearing easily, the width e possibly being virtually zero.

5. A tread according to one of Claims 1 to 4, **characterised in that** the anti-connection elements (5), be they in the form of incisions or spaces with anti-sticking material, have outer walls which, viewed in section, are represented by a closed curve such as a circle or parallelogram.

6. A tread (3) according to one of Claims 1 to 4, **characterised in that** the anti-connection elements (5), be they in the form of incisions or spaces with anti-sticking material, have outer walls being, viewed in section, represented by an open curve, the anti-connection element then having at least two branches (51, 52) of thickness e, which are substantially parallel to the equatorial plane.

7. A tread (3) according to one of Claims 1 to 6, **characterised in that** those points of the outer wall of an element which are farthest from the axis of rotation are preferably distant from the tread surface by a quantity h₁ such that the difference (h - h₁) is at least equal to the standardised thickness of the wear indicators located in the bottom of circumferential grooves.

8. A tread according to Claim 6, **characterised in that** the radially outer ends (53) of the branches (51, 52) of the incisions or inserts (5) arranged in said tread have contours in the form of continuous lines of variable height, said height being measured relative to the bottom of the anti-connection element (5).

9. A tread according to Claim 8, **characterised in that** the contours are representative of a periodic function.

10. A tread (3) according to Claim 6, **characterised in that** the branches (51, 52) are independent of each other, the radially lower ends of said two branches being distant by a quantity at most equal to 6 mm.

11. A tread according to one of Claims 3 or 4, **characterised in that** the walls of the inserts (5) with solid anti-sticking material are provided with a plurality of orifices (55), each orifice having a surface area at most equal to 25 mm² and dimensions of between 0.5 mm and 25 mm, and the amount of bridging being between 5% and 35%.

12. A tread (3) according to Claim 1, **characterised in that** the anti-connection elements (5) form a network 5A, 5B so as to obtain not only the regrooving of circumferential grooves (31, 32) but also the regrooving of the transverse and/or oblique grooves opening on to said circumferential grooves.

13. A tread according to one of Claims 1 to 12, **characterised in that** each anti-connection element furthermore comprises a means for making visible the anti-connection element on the tread when the wear of said tread is such that the ends of said element which are radially closest to the running surface in the initial state come into contact with the roadway during travel.

14. A tread according to one of Claims 1 to 13, **characterised in that** each anti-connection element comprises a means indicating that said beading opens on to the running surface of the tread after partial wear, this means consisting for example of a coloration of the anti-connection element which is different from that of the tread.

15. A process for manufacturing a non-vulcanised tread (3) according to Claim 3, **characterised in that** it comprises the following steps:
a) producing a first profiled tread of non-vulcanised rubber mix with grooves corresponding to the regrooving grooves to be created,
b) producing the inserts (5) of solid anti-sticking material, the inserts lying, when viewed in meridian section, closely against the form(s) of the regrooving grooves,
c) inserting said inserts into the grooves of the first tread above with providing the band with means adapted in number, dimensions and location in order to obtain bridging between the regrooving beading (6) and the rest of the tread, such bridging preventing separation between the insert and the band during travel,
d) laying in said grooves provided with their inserts profiled regrooving beadings (6) of non-vulcanised rubber mix,
e) possibly laying on the assembly thus constituted a second tread of non-vulcanised rubber mix.

16. A process for manufacturing a prevulcanised tread (3) according to Claim 2, **characterised in that** it then consists of using a vulcanisation mould having two dies, with a first die of said mould comprising as moulding elements inter alia metallic lamellae capable of creating by moulding and vulcanisation the anti-connection elements (5), incisions, and a second die comprising the moulding elements intended to form the grooves (31, 32) and/or the incisions of the new tread (3).

17. A method of regrooving a tread (3) according to one of Claims 7 or 8, **characterised in that** it consists, after visualisation of the radially upper ends (53) of the anti-connection elements (5), of cutting out a small number of bridges (55) of vulcanised rubber connecting each regrooving beading (6) to the rest of the tread and extracting each beading by breaking the rest of the bridges of vulcanised rubber by traction.

## Patentansprüche

1. Laufstreifen (3) mit einer Dicke H, dazu bestimmt, in einem Reifen mit Karkassenverstärkung (1) verwendet zu werden, über der sich eine Verstärkung der Laufstreifenkrone (2) befindet, wobei dieser Streifen auf seiner Außenfläche mit mehreren Rillen (31, 32) mit einer Tiefe h versehen ist, davon mindestens Umfangsrillen, die axial durch Rippen getrennt sind, wobei dieser Streifen mindestens ein inneres Verbindungsschutzelement (5) Gummi auf ·Gummi aufweist, dessen Außenwand, in meridionalem Querschnitt gesehen, teilweise eine Kontur aufweist, die identisch ist mit der Kontur der Wand der zu erzeugenden Nachschneidrille, wobei der/die Punkt(e) der Wand, der/die am weitesten von der Rotationsachse entfernt ist/sind, um eine Menge h₁, die niedriger ist als die Tiefe h der Rillen, radial entfernt ist/sind von der Fläche des Laufstreifens, und der/die Punkt(e) der Wand, der/die der Rotationsachse am nächsten ist/sind, um die maximale Nachschneidehöhe H von der Fläche des Laufstreifens radial entfernt ist/sind, wobei dieser Laufstreifen **dadurch gekennzeichnet ist, dass** jedes Verbindungsschutzelement, das eine Nachschneiderille begrenzt, ein Mittel aufweist, das eine teilweise Verbindung mit seiner kautschukartigen Umgebung gewährleistet, wobei das Mittel sich in Form mindestens eines Profilstegs darstellt, der das Hinausschleudern des Stoffes, der sich in der Nachschneiderille befindet, während des Fahrens verhindert, wenn das Verbindungsschutzelement nach Abnutzung auf den Laufstreifen gelangt, wobei gleichzeitig die Entfernung des Stoffes durch eine Bedienungsperson durch Bruch jedes Profilstegs möglich ist.

2. Laufstreifen (3) nach Anspruch 1, **dadurch gekennzeichnet, dass** das/die Verbindungsschutzelement(e) (5) Gummi auf Gummi Ausschnitte oder Einschnitte sind, deren Wände in einer Dicke zwischen 0,2 mm und 2 mm voneinander entfernt sind und die durch die Atmosphäre getrennt sind.

3. Laufstreifen (3) nach Anspruch 1, **dadurch gekennzeichnet, dass** das/die Verbindungsschutzelement(e) (5) Gummi auf Gummi Räume mit einer Breite e oder Zwischenräume sind, die mit einem festen Stoff gefüllt sind, der die Eigenschaft aufweist, ein Antiklebemittel zwischen Gummi zu sein und selbst nicht auf Gummi zu kleben, wobei die Breite e fast null sein kann.

4. Laufstreifen nach Anspruch 1, **dadurch gekennzeichnet, dass** das/die Verbindungsschutzelement(e) (5) Gummi auf Gummi Räume mit einer Breite e oder Zwischenräume sind, die aus einem festen Stoff bestehen, der die Eigenschaft aufweist, ein Antiklebemittel zwischen Gummi zu sein und leicht zu zerreißen, wobei die Breite e fast null sein kann.

5. Laufstreifen nach einem der Ansprüche 1 bis 4, **dadurch gekennzeichnet, dass** die Verbindungsschutzelemente (5), egal, ob sie die Form von Einschnitten oder Räumen mit Antiklebemittel haben, Außenwände aufweisen, die, im Querschnitt gesehen, durch eine geschlossene Kurve, wie zum Beispiel einen Kreis, ein Parallelogramm, usw. dargestellt sind.

6. Laufstreifen (3) nach einem der Ansprüche 1 bis 4, **dadurch gekennzeichnet, dass** die Verbindungsschutzelemente (5), egal, ob sie die Form von Einschnitten oder Räumen mit Antiklebemittel haben, Außenwände aufweisen, die, im Querschnitt gesehen, durch eine offene Kurve dargestellt sind, wobei das Verbindungsschutzelement dann mindestens zwei Stränge (51, 52) mit einer Stärke e aufweist, die im Wesentlichen parallel zur äquatorialen Ebene verlaufen.

7. Laufstreifen (3) nach einem der Ansprüche 1 bis 6, **dadurch gekennzeichnet, dass** die Punkte der Außenwand eines Elements, die am weitesten von der Rotationsachse entfernt sind, vorzugsweise um eine Menge h₁ von der Fläche des Laufstreifens entfernt sind, so dass die Differenz (h - h₁) mindestens gleich der Standardstärke der Abnutzungsindikatoren ist, die sich am Boden der Umfangsrillen befinden.

8. Laufstreifen nach Anspruch 6, **dadurch gekennzeichnet, dass** die radial äußeren Enden (53) der Stränge (51, 52) der Einschnitte oder Zwischenräume (5), die in der Fläche angeordnet sind, Konturen in Form von durchgehenden Linien mit variabler Höhe aufweisen, wobei die Höhe in Bezug auf den Boden des Verbindungsschutzelements (5) gemessen wird.

9. Laufstreifen nach Anspruch 8, **dadurch gekennzeichnet, dass** die Konturen für eine periodische Funktion repräsentativ sind.

10. Laufstreifen (3) nach Anspruch 6, **dadurch gekennzeichnet, dass** die Stränge (51, 52) voneinander unabhängig sind, wobei die radial unteren Enden der beiden Stränge um eine Menge von höchstens gleich 6 mm voneinander entfernt sind.

11. Laufstreifen nach einem der Ansprüche 3 oder 4, **dadurch gekennzeichnet, dass** die Wände der Zwischenlagen (5) mit festem Antiklebemittel mit mehreren Öffnungen (55) versehen sind, wobei jede Öffnung eine Fläche von höchstens gleich 25 mm² und Abmessungen zwischen 0,5 mm und 25 mm aufweist, wobei der Grad der Vernetzung zwischen 5% und 35% beträgt.

12. Laufstreifen (3) nach Anspruch 1, **dadurch gekennzeichnet, dass** die Verbindungsschutzelemente (5) ein Netz 5A, 5B bilden, so dass nicht nur das Nachschneiden von Umfangsrillen (31, 32) erreicht wird, sondern auch das Nachschneiden der Quer- und/oder Schrägrillen, die in die Umfangsrillen münden.

13. Laufstreifen nach einem der Ansprüche 1 bis 12, **dadurch gekennzeichnet, dass** jedes Verbindungsschutzelement ferner ein Mittel aufweist, das das Verbindungsschutzelement auf der Lauffläche sichtbar macht, wenn die Abnutzung des Streifens derart ist, dass die Enden des Elements, die der Lauffläche im Ursprungszustand radial am nächsten sind, während des Fahrens in Kontakt mit der Straße geraten.

14. Laufstreifen nach einem der Ansprüche 1 bis 13, **dadurch gekennzeichnet, dass** jedes Verbindungsschutzelement ein Mittel aufweist, das anzeigt, dass der Steg nach Teilabnutzung auf die Lauffläche des Streifens gelangt, wobei dieses Mittel zum Beispiel aus einer unterschiedlichen Färbung des Verbindungsschutzelements im Vergleich zu der des Streifens besteht.

15. Verfahren zur Herstellung eines nicht vulkanisierten Laufstreifens (3) nach Anspruch 3, **dadurch gekennzeichnet, dass** es folgende Schritte aufweist:
a) Ausführung eines ersten Profilstreifens aus einer nicht vulkanisierten Kautschukmischung mit Rillen, die den zu erzeugenden Nachschneidrillen entsprechen,
b) Ausführung der Zwischenlagen (5) aus einem festen Antiklebemittel, Zwischenlagen, die in meridionalem Querschnitt gesehen, sich an die Form(en) der Nachschneidrillen anpassen,
c) Einfügung der Zwischenlagen in die Rillen des ersten obigen Streifens, indem der Streifen mit Mitteln versehen wird, die in ihrer Anzahl, ihren Abmessungen, ihrer Anordnung geeignet sind, um die Bildung von mindestens einer Verbindungsbrücke aus Kautschukmischung zwischen dem Nachschneidsteg (6) und dem Rest des Laufstreifens zu erreichen, wobei diese Verbindungsbrücke die Abtrennung des Stegs von dem Streifen während des Fahrens vermeidet,
d) Einbau von Profil-Nachschneidstegen (6) aus nicht vulkanisiertem Kautschukgemisch in den Rillen, die mit ihren Zwischenlagen versehen sind,
e) eventueller Einbau eines zweiten Streifens aus nicht vulkanisiertem Kautschukgemisch auf der gesamten, auf diese Weise gebildeten Einheit.

16. Verfahren zur Herstellung eines vorvulkanisierten Laufstreifens (3) nach Anspruch 2, **dadurch gekennzeichnet, dass** es dann darin besteht, eine Vulkanisationsform mit zwei Gesenken zu verwenden, mit einem ersten Gesenk der Form, das als Gießelemente unter anderem Metalllamellen aufweist, die durch Guss und Vulkanisation die Verbindungsschutzelemente (5), die Einschnitte sind, erzeugen können, und einem zweiten Gesenk, das die Gießelemente aufweist, die dazu bestimmt sind, die Rillen (31, 32) und/oder die Einschnitte des neuen Laufstreifens (3) zu bilden.

17. Verfahren zum Nachschneiden eines Laufstreifens (3) nach einem der Ansprüche 7 oder 8, **dadurch gekennzeichnet, dass** es darin besteht, nach Sichtbarmachung der radial oberen Enden (53) der Verbindungsschutzelemente (5), eine kleine Anzahl von Brücken (55) aus vulkanisiertem Kautschuk, die jeden Nachschneidsteg (6) mit dem Rest des Laufstreifens verbindet, abzuschneiden und jeden Steg herauszuziehen, indem der Rest der Brücken aus vulkanisiertem Kautschuk zerrissen wird.
